# EUROPEAN PATENT SPECIFICATION

(11) **EP 3 158 599 B1**
(45) Date of publication and mention of the grant of the patent: **05.06.2019**
(21) Application number: 15808900.3
(22) Date of filing: 19.06.2015
(51) Int. Cl.: H01M 4/08, H01M 4/13, C01B 32/05, C01B 33/023, H01M 10/052, H01M 10/0569, H01M 10/0525, H01M 4/02, H01M 4/134, H01M 4/1395, H01M 4/36, H01M 4/38, H01M 4/62

(54) **POROUS SILICON ELECTRODE AND METHOD**
PORÖSE SILICIUMELEKTRODE UND VERFAHREN
ÉLECTRODE DE SILICIUM POREUX ET PROCÉDÉ ASSOCIÉ

(30) Priority: 20.06.2014 US 201462015019 P
(43) Date of publication of application: 26.04.2017
(73) Proprietor: THE REGENTS OF THE UNIVERSITY OF CALIFORNIA, Oakland, CA 94607-5200 (US)
(72) Inventor: FAVORS, Zachary, Corona, CA 92882 (US); OZKAN, Cengiz S., San Diego, CA 92130 (US); OZKAN, Mihrimah, San Diego, CA 92130 (US)
(74) Representative: Pfenning, Meinig & Partner mbB
(86) International application number: PCT/US2015/036719
(87) International publication number: WO 2015/196088

(56) References cited:
- GB-A- 2 502 625
- KR-B1- 101 396 521
- US-A1- 2013 089 785
- US-A1- 2014 030 597
- WEI LUO ET AL: "Efficient Fabrication of Nanoporous Si and Si/Ge Enabled by a Heat Scavenger in Magnesiothermic Reactions", SCIENTIFIC REPORTS, vol. 3, no. 2222, 17 July 2013 (2013-07-17), pages 1-7, XP055247861, DOI: 10.1038/srep02222
- NIAN LIU ET AL: "A Yolk-Shell Design for Stabilized and Scalable Li-Ion Battery Alloy Anodes", NANO LETTERS, vol. 12, no. 6, 13 June 2012 (2012-06-13), pages 3315-3321, XP055216691, ISSN: 1530-6984, DOI: 10.1021/nl3014814
- LUO, W ET AL.: 'Efficient Fabrication of Nanoporous Si and Si/Ge Enabled by a Heat Scavenger in Magnesiothermic Reactions'';' SCENTIFIC REPORT 3, [Online] 17 July 2013, pages 1 - 3 AND 6, XP055247861 Retrieved from the Internet: <URL:http://www. nature .com/srep/2013/130717/srep02222/full/srep02 222.html> [retrieved on 2015-08-19]

## Description

### Technical Field

This invention relates to silicon based material microstructures and methods. In one example, this invention relates to silicon based anodes for lithium ion batteries.

### Background

Improved batteries, such as lithium ion batteries are desired. One example of a battery structure that can be improved is an anode structure.

For example, the publication by WEI LUO ET AL: "Efficient Fabrication of Nanoporous Si and Si/Ge Enabled by a Heat Scavenger in Magnesiothermic Reactions", SCIENTIFIC REPORTS, vol. 3, no. 2222, 17 July 2013 (2013-07-17), pages 1-7, describes that magnesiothermic reduction can directly concert SiO₂ into Si nanospheres. Efficient fabrication of highly nanoporous silicon by Mg is described to remain a significant challenge due to the exothermic reaction nature. By employing table salt (NaCl) as a heat scavenger for the magnesiothermic reduction, a route is demonstrated to convert diatom (SiO₂) and SiO₂/GeO₂ into nanoporous Si and Si/Ge composite, respectively. Fusion of NaCl during the reaction consumes a large amount of heat that otherwise collapses the nano-porosity of products and agglomerates silicon domains into large crystals. The methodology is described as being potentially competitive for a practical production of nanoporous Si-based materials.

Document GB 2 502 625 A describes a method of forming a particulate material comprising silicon, the method comprising the step of reducing a particulate starting material comprising silica-containing particles having an aspect ratio of at least 5:1 and an smallest dimension of less than 3 microns, or reducing a particulate starting material comprising silica-containing particles comprising a plurality of elongate structural elements, each elongate structural element having an aspect ratio of at least 5:1 and a smallest dimension of less than 3 microns. The particulate material may be used in Lithium batteries, fuel cells, solar cells, capacitors, chromatography and wound dressings.

The publication by NIAN LIU ET AL: "A Yolk-Shell Design for Stabilized and scalable Li-Ion Battery Alloy Anodes", NANO LETTERS, vol. 12, no. 6, 13 June 2012 (2012-06-13), pages 3315-3321, describes a yolk-shell design for stabilized and scalable Li-ion battery alloy anodes. The fabrication is carried out mostly at room temperature. Commercially available Si nanoparticles are completely sealed inside conformal, thin, self-supporting carbon shells, with rationally designed void space in between the particles and the shell. Well-defined void space allows the Si particles to expand freely without breaking the outer carbon shell, therefore stabilizing the solid-electrolyte interphase on the shell surface.

Document US 2013/089785 A1 describes a negative-electrode material powder used for a lithium-ion secondary battery. The powder for the battery includes a conductive carbon film on a lower silicon oxide powder surface. Si in SiC is 15.1 wt % or less in content, or A3 (=A2-A1) is 15.1 or less, given A1 (wt %): Si content measured by acid solution process, and A2 (wt %): Si content measured by alkali solution process. A specific resistance is 30,000 Ωcm or less. In the lower silicon oxide powder, a maximum value P1 of SiOx-derived halos appearing at 2θ=10° to 30° and a value P2 of the strongest line peak of Si (111) appearing at 2θ=28.4±0.3°, in XRD using CuKα beam, preferably satisfy P2/P1<0.01. The content of tar component is preferably 1 ppm or more and 4,000 ppm or less.

### Summary

The invention is defined in independent claims 1 and 5. In accordance with the invention, a method of forming a battery electrode comprises:
mixing silicon oxide powder and sodium chloride;
adding a reducing agent;
reducing the silicon oxide and sodium chloride mixture to produce silicon;
etching the reduced silicon and forming a porous silicon microstructure; and
   coating the porous silicon microstructure with an amorphous carbon coating.
Moreover, in accordance with the invention, a battery comprises:
a first electrode, including:
   a porous silicon material, having a specific surface area of 300-350 m² g⁻¹ and a pore diameter of approximately 9nm;
a second electrode;
an electrolyte in contact with both the first electrode and the second electrode; and
a carbon coating covering the porous silicon material.
Further aspects and preferred embodiments are defined in the dependent claims. Examples of the present disclosure which do not fall under the scope of the appended claims do not form part of the claimed invention and are merely provided for illustrative purposes.

### Brief Description of the Drawings

FIG. 1 shows one synthesis process according to an example of the invention.
FIG. 2 shows materials characterization results and images according to an example of the invention.
FIG. 3 shows additional images and surface area data of materials according to an example of the invention.
FIG. 4 shows electrical properties of a battery using materials according to an example of the invention.
FIG. 5 shows a battery according to an example of the invention.
FIG. 6 shows a method of forming a material according to an example of the invention.

### Detailed Description

In the following detailed description, reference is made to the accompanying drawings which form a part hereof, and in which is shown, by way of illustration, specific embodiments in which the invention may be practiced. In the drawings, like numerals describe substantially similar components throughout the several views. These embodiments are described in sufficient detail to enable those skilled in the art to practice the invention. Other embodiments may be utilized and structural, or logical changes, etc. may be made without departing from the scope of the present invention.

Porous nano-silicon has been synthesized via a highly scalable heat scavenger-assisted magnesiothermic reduction of beach sand. This environmentally benign, highly abundant, and low cost SiO₂ source allows for production of nano-silicon at the industry level with excellent electrochemical performance as an anode material for Li-ion batteries. The addition of NaCl, as an effective heat scavenger for the highly exothermic magnesium reduction process, promotes the formation of an interconnected 3D network of nano-silicon with a thickness of 8-10nm. Carbon coated nano-silicon electrodes achieve remarkable electrochemical performance with a capacity of 1024 mAhg⁻¹ at 2 Ag⁻¹ after 1000 cycles.

Silicon is considered the next generation anode material for Li-ion batteries and has already seen applications in several commercial anodes. This is due to its high theoretical capacity of 3572 mAhg⁻¹ corresponding to ambient temperature formation of a Li₁₅Si₄ phase. However, silicon has major drawbacks stemming from the large volume expansion upwards of 300% experienced during lithiation. Depending on the structure, lithiation-induced mechanical stresses cause silicon structures to fracture when the characteristic dimension is as small as 150nm, which promotes pulverization and loss of active material. Despite scaling the dimensions of silicon architectures below this critical dimension, the large volume expansion deteriorates the integrity of the solid electrolyte interphase (SEI). Expansion upon lithiation and subsequent contraction during delithiation leads to the constant fracturing and reformation of new SEI, resulting in irreversible capacity loss. Several structures such as double-walled silicon nanotubes, porous silicon nanowires, and postfabrication heat-treated silicon nanoparticle (SiNP) anodes have alleviated this issue via protecting the crucial SEI layer after its initial formation.

While a myriad of silicon nanostructures have exhibited excellent electrochemical performance as anode materials, many of them lack scalability due to the high cost of precursors and equipment setups or the inability to produce material at the gram or kilogram level. Silicon nanostructures derived from the pyrolization of silane, such as silicon nanospheres, nanotubes, and nanowires, have all demonstrated excellent electrochemical performance. However, chemical vapour deposition (CVD) using toxic, expensive, and pyrophoric silane requires costly setups and cannot produce anode material on the industry level. Metal assisted chemical etching (MACE) of crystalline silicon wafers has been investigated as a means of producing highly tunable silicon nanowires via templated and non-templated approaches. However, electronic grade wafers are relatively costly to produce and the amount of nanowires produced via MACE is on the milligram level. Crystalline wafers have also been used to produce porous silicon via electrochemical anodization in an HF solution.

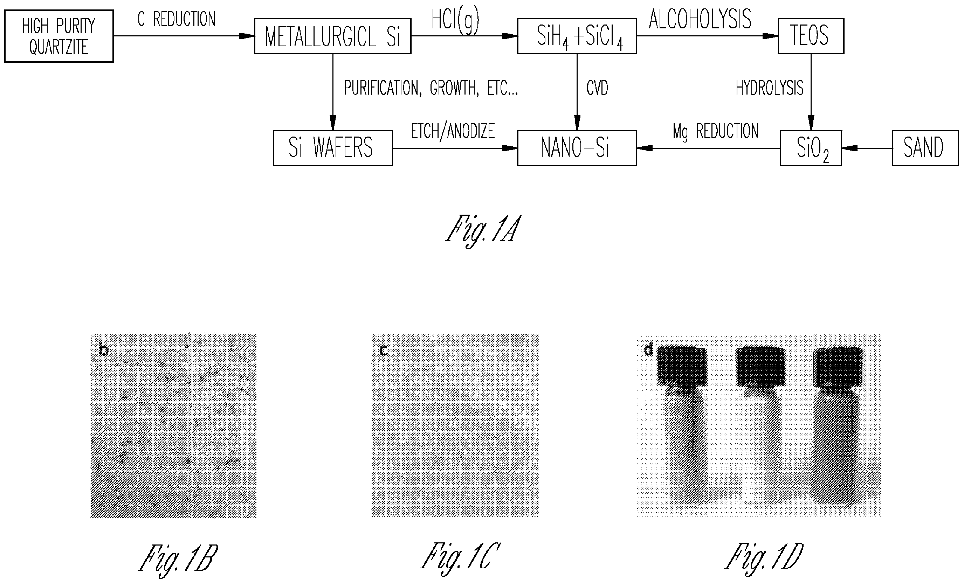

Quartz (SiO₂) has been demonstrated as a high capacity anode material without further reduction to silicon, with a reversible capacity of ∼800 mAhg⁻¹ over 200 cycles. However, SiO₂ is a wide bandgap insulator with a conductivity ∼10¹¹ times lower than that of silicon. Additionally, SiO₂ anodes carry 53.3% by weight oxygen which reduces the gravimetric capacity of the anodes. The highly insulating nature of SiO₂ is also detrimental to the rate capability of these anodes. Tetraethyl Orthosilicate (TEOS) has garnered significant attention recently due its ability to produce nano-SiO₂ via hydrolysis. The SiO₂ has been subsequently reduced to silicon in such structures as nanotubes and mesoporous particles. However, examining Figure 1a reveals the extensive production process needed to produce TEOS. Conversely, a method of synthesizing nano-Si has been demonstrated via magnesiothermic reduction of rice husks (SiO₂), an abundant by-product of rice production measured in megatons per year.

Thermic reduction of SiO₂ can be accomplished via a few well-known mechanisms including carbothermal, magnesiothermic, aluminothermic, and calciothermic reduction. Carbothermal reduction utilizes electric arc furnaces operating at >2000°C and is the primary mode for metallurgical silicon production. However, this process is very energy intensive and liquefies the silicon, thus destroying any original morphology of the SiO₂. Recently, magnesiothermic reduction has gained attention due its much lower operating temperatures (∼650°C). Typically, Mg powder is placed adjacent to SiO₂ powder and the furnace is heated until the Mg vaporizes. However, this reduction scheme produces zonal variations in composition with Mg₂Si forming near the Mg powder, Si in the middle, and unreacted SiO₂ furthest from the Mg. Luo et al. have shown that adding a relatively large amount of NaCl to the reduction process aids in scavenging the large amount of heat generated during this highly exothermic reaction. NaCl effectively halts the reaction temperature rise at 801°C during fusion, preventing the reaction from surpassing the melting point of silicon and thus aiding in preserving the original SiO₂ morphology. Herein, we propose a facile and low cost alternative to production of nano-Si with excellent electrochemical performance using a highly abundant, non-toxic, and low cost Si precursor: sand.

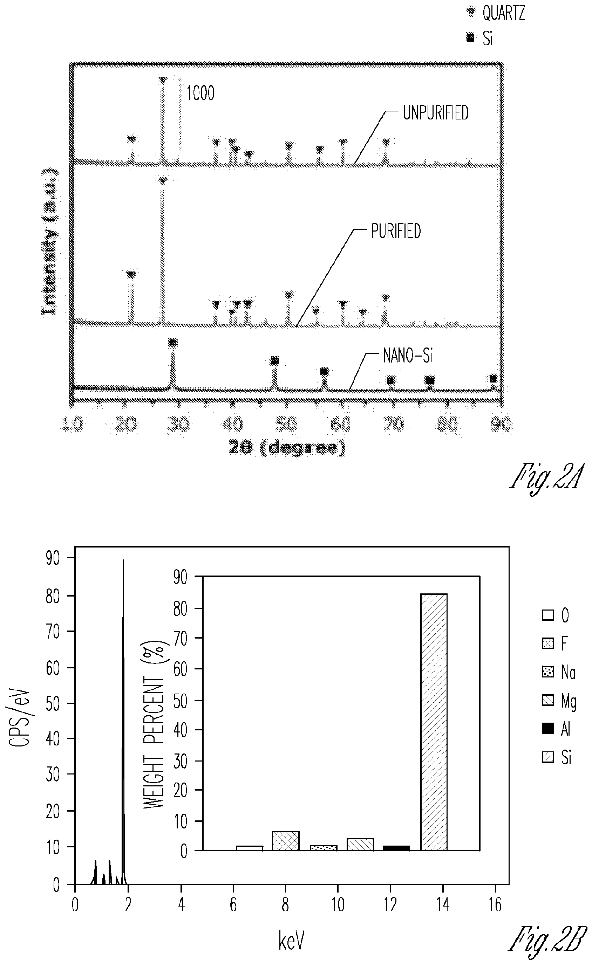

The majority constituent of many sands is quartz (SiO₂) and sand is easily collected since it is predominantly found on the surface of the earth's crust. The sand used in this analysis was collected from the loamy surface of the shores of Cedar Creek Reservoir in the Claypan region of Texas. The soil of this region is classified as an Alfisol, specifically a Paleustalf, comprising >90% quartz with minor amounts of feldspars and chert. The sand grains utilized herein have a grain size of ∼0.10mm, as in Figure 1b. Further mechanical milling in an alumina mortar easily reduces the grain size to the micrometer and nanometer scale within minutes. Organic species are removed via calcining in air at 900°C, and the sand is then sequentially washed with HCl, HF, and NaOH for varying amounts of time. Unwanted silicate species are removed via the HF etch, as crystalline quartz etches much slower than other silicate species such as feldspars. After purification, the sand assumes a bright white appearance in stark contrast to the brown hue of the unpurified sand, as in Figure 1c. The peaks associated with unpurified sand in the XRD analysis in Figure 2a confirm that the sample comprises mostly quartz with very minor peaks corresponding to impurities. After purifying the sand, the peaks associated with quartz greatly increase in intensity relative to the impurity peaks, confirming that most of the impurities have been successfully etched away.

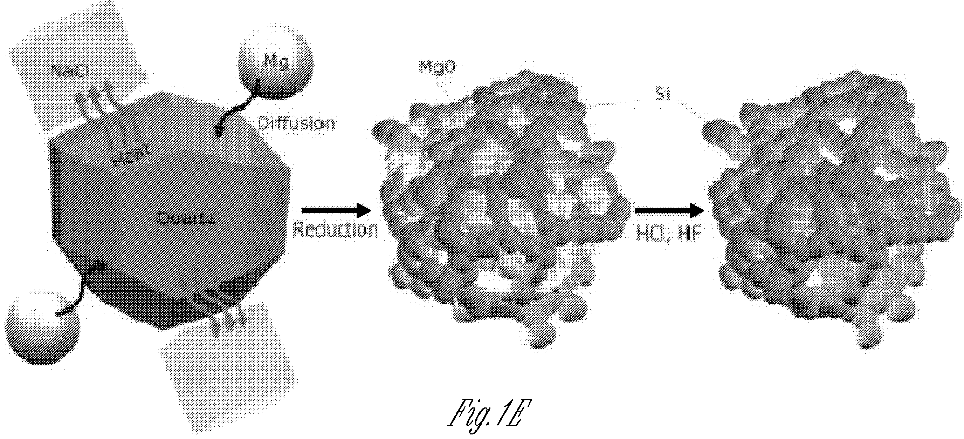

After purification, quartz powder and NaCl is ground together in a 1:10 SiO₂:NaCl weight ratio and ultrasonicated and vigorously stirred for 2 hours. After drying, the SiO₂:NaCl Powder is ground together with Mg powder in a 1:0.9 SiO₂:Mg weight ratio. The resultant powder is loaded into Swagelok-type reactors and sealed in an argon-filled (0.09 ppm O₂) glovebox. The reactors are immediately loaded into a 1" diameter quartz tube furnace purged with argon. The furnace is slowly heated at 5°C min⁻¹ to 700°C and held for 6 hours to ensure complete reduction of all SiO₂. After reduction the resulting brown powder is washed with DI water to remove NaCl and then etched with 1M HCl for 6 hours to remove Mg, Mg₂Si, and MgO. The MgCl₂ that is produced via HCl etching of MgO can be easily recycled back to Mg via electrolysis, which is the predominant industrial synthesis route for Mg production. The powder is washed several times with DI H₂O and EtOH to remove the etchant and dried overnight under vacuum. A visual comparison, without magnification, of unpurified beach sand, purified quartz, and nano-Si stored in glass vials can be seen in Figure 1d, and the entire synthesis process can be visualized in Figure 1e.

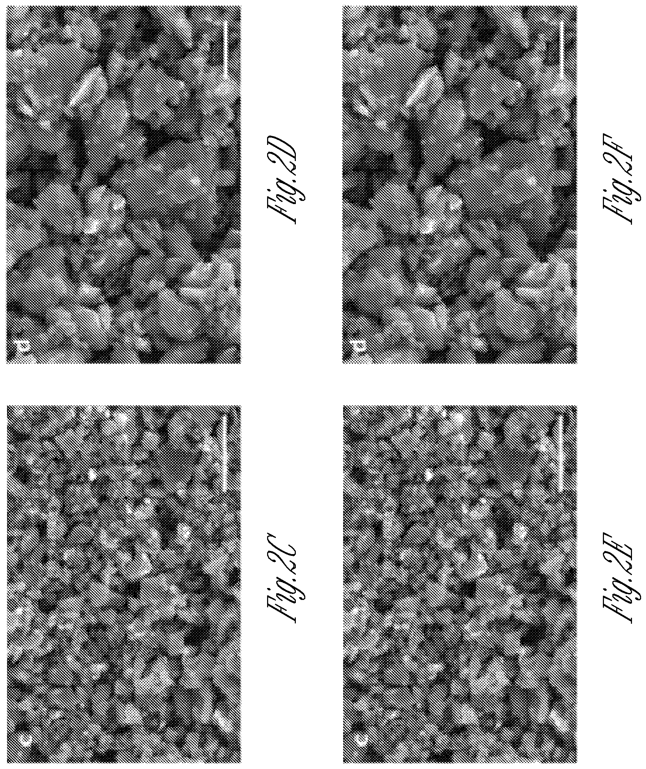

SEM imaging in Figure 2 reveals the broad size distribution and highly irregular morphology of the milled quartz powder before and after reduction. For the milled quartz powder, the particle size ranges from several microns to 50nm, as in Figures 2c and 2d. The quartz powder and nano-Si reduction product are both highly irregular in shape as expected. After reduction, the nano-Si is absent of particles with dimensions in excess several microns and has a much smaller size distribution than the quartz powder, as in Figures 2e and 2f. We can attribute this to the breakdown of relatively larger particles during reduction and ultrasonication, which is due to the reduced mechanical integrity of the porous 3D nano-Si networks in comparison to the solid pre-reduction quartz particles.

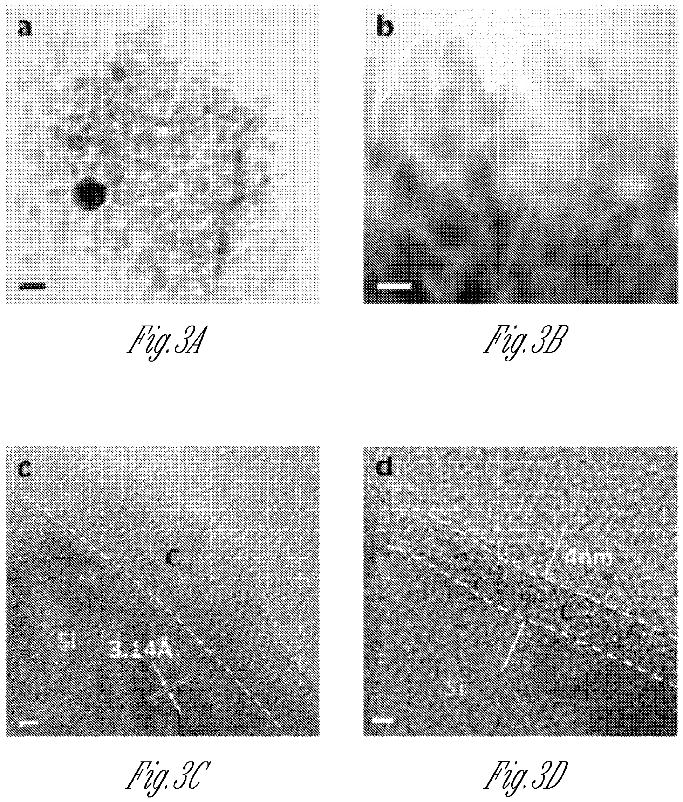

In lieu of the solid crystalline particles found in the quartz powder, the nano-Si powder is composed of a highly porous network of interconnected crystalline silicon nanoparticles (SiNPs). HRTEM in Figures 3a and 3b reveals the interconnected SiNPs that comprise the 3D Si networks, and the diameter of the SiNPs is ∼8-10nm, with larger particles existing sparingly. This high porosity can be attributed to the selective etching of imbedded MgO and Mg₂Si particles after reduction. Through the use a NaCl as a heat scavenger during the reduction process, we are able to synthesize a highly uniform porous structure throughout the width of the particle by avoiding localized melting of Si. This uniform 3D network is achieved via removal of oxygen (53.3% by weight) from the original quartz particles through reduction and a conservation of volume via the heat scavenger (NaCl). The XRD peaks in Figure 2a indicate a successful reduction to silicon after Mg reduction.

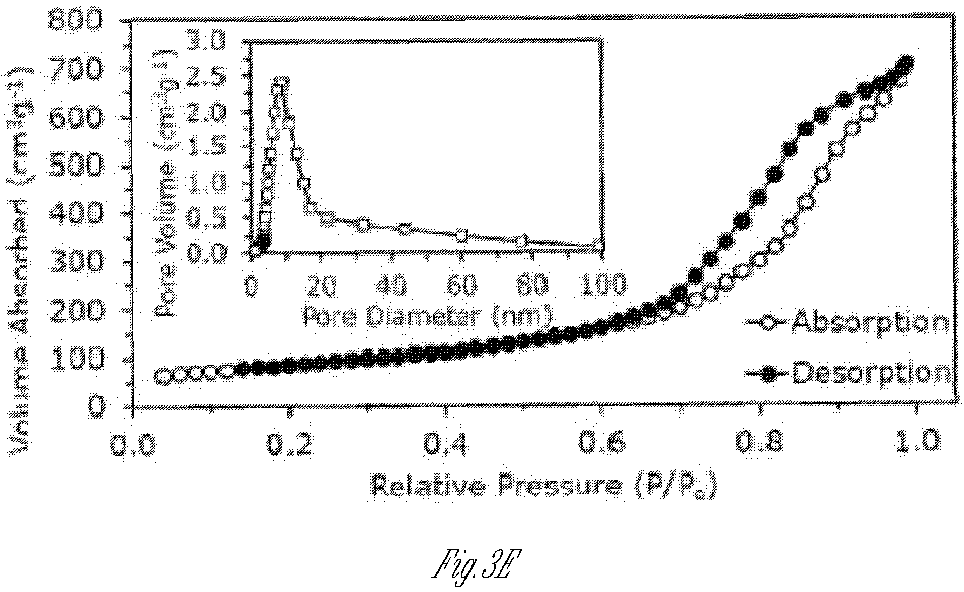

Energy Dispersive X-ray Spectroscopy (EDS) in Figure 2b reveals the weight percentage of elements present in the nano-Si powder. The quantitative analysis shows Si is the predominant element present with non-negligible amounts of F, Na, Mg, Al, and O. The F and Na peaks may be due to the existence of Na₂SiF₆, which is produced via a reaction between residual NaCl and H₂SiF₆ produced during HF etching of SiO₂. The existence of Al may be derived from the original sand or from the alumina mortar. While the existence of metallic contaminants at these levels may present deleterious effects for some applications, for battery applications these metallic impurities may increase the conductivity of nano-Si. Despite silicon's relatively high surface diffusion capability with respect to bulk diffusion of Li, silicon has relatively low electrical conductivity. Thus, nano-Si powders were conformally coated with a ∼4nm amorphous carbon coating to enhance conductivity across all surfaces, as in Figures 3c and 3d. Briefly, nano-Si powder was loaded into a quartz boat and placed in the center of a quartz tube furnace purged with an H₂/Ar mixture. After heating to 950°C, acetylene was introduced into the tube to produce a conformal C-coating. The weight ratio of Si to C was determined to be 81:19 after coating. Brunauer-Emmett-Teller (BET) surface area measurements were performed for nano-Si before c-coating yielding a specific surface area of 323 m²g⁻¹, as in Figure 3e. The inset in Figure 3e reveals a pore diameter distribution with a peak centred at 9nm. The pore diameter is in good agreement with the TEM images of porous nano-Si. This high surface area confirms that NaCl effectively scavenges the large amount of heat generated during Mg reduction, preventing agglomeration of nano-Si. The high surface area and pore volume distribution also confirm the existence of large internal porosity available for volume expansion buffering and, thus, minimal capacity fading due to SEI layer degradation and active material pulverization.

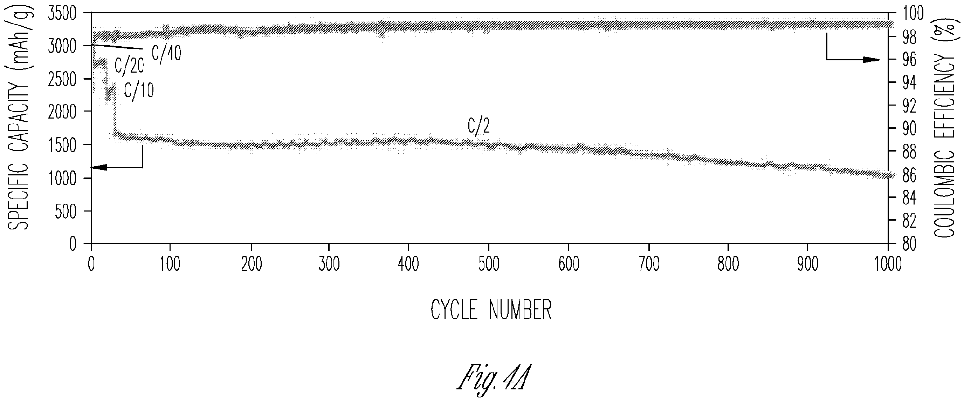

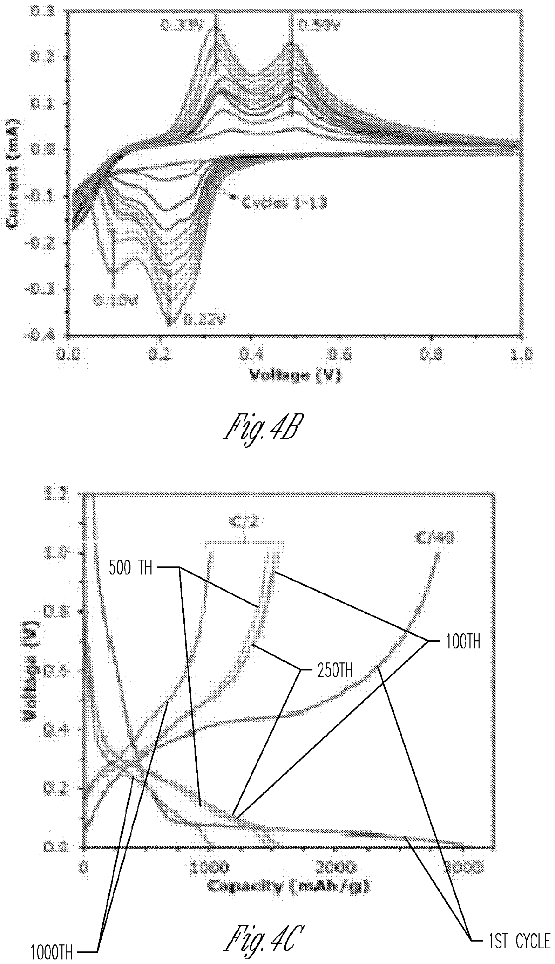

Carbon coated nano-Si according to examples of the present invention were electrochemically characterized using the half-cell configuration with Li-metal as the counter-electrode. Electrodes comprised carbon coated nano-Si, acetylene black (AB), and PAA in a 7:1:2 carbon coated nano-Si:AB:PAA weight ratio. Figure 4a demonstrates the rate capability of the C-coated nano-Si electrodes up to the C/2 rate, with additional cycling up to 1000 cycles at the C/2 rate. Initial cycling at C/40 is necessary for proper activation of all Si and development of a stable SEI layer. This activation process is confirmed via cyclic voltammetry measurements, as in Fig. 4b. The peaks corresponding to the lithiation (0.22V and 0.10V) and delithiation (0.33V and 0.50V) grow in intensity over the first 12 cycles before stabilizing, which suggests a kinetic enhancement occurs in the electrode. After a kinetic enhancement is achieved via this low current density activation process, the electrodes are cycled at much higher rates. Even at the C/2 rate the nano-Si electrodes demonstrate a reversible capacity of 1024 mAhg⁻¹ and a Coulombic efficiency of 99.1% after 1000 cycles. We attribute the excellent cycle stability of the carbon coated nano-Si electrodes to a combination of the conformal C-coating, PAA binder, and the porous 3D nano-Si network.

The addition of a C-coating alters the makeup of the SEI layer and may also partially alleviate the lithiation-induced volume expansion effects in nano-Si. The use of PAA as the binder also greatly enhances the cyclability of the electrodes. Cycling performance of PAA-bound electrodes is improved relative to conventionally used binders such as poly(vinylidene fluoride) (PVDF) and carboxymethylcellulose (CMC). The improved stability is attributed to PAA's similar mechanical properties to that of CMC but higher concentration of carboxylic functional groups. The mechanical properties of PAA prevent the formation of large void spaces created during lithiation and delithiation of Si. The higher concentrations of carboxylic groups form strong hydrogen bonds with hydroxyl groups on C and Si, minimizing separation of binder from active material during cycling. The porous nature of the nano-Si is also partly responsible for the good cyclability due to the internal void space available for the interconnected network of Si to expand. Despite the fact that some of the 3D nano-Si networks have diameters of several hundreds of nanometers, the SiNPs that comprise these networks are only 8-10nm in diameter.

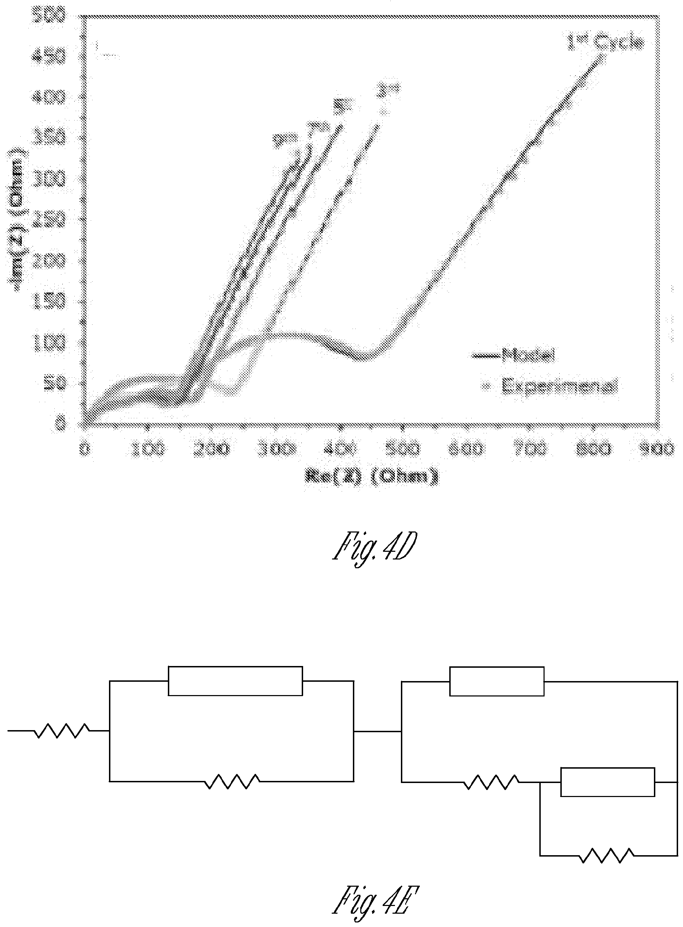

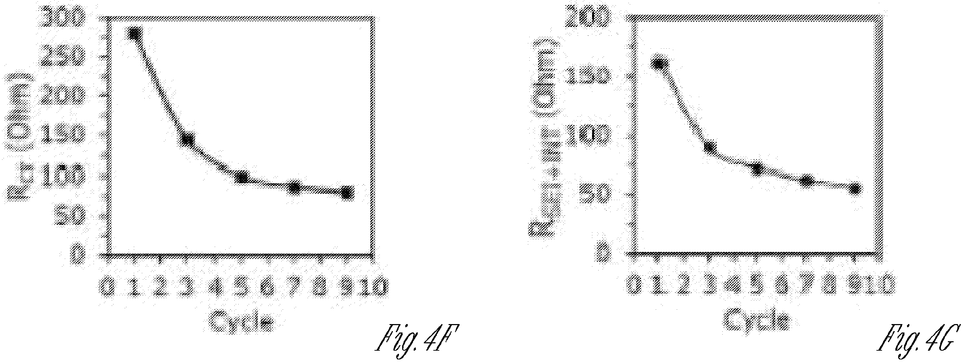

Complex impedance plots for carbon coated nano-Si anodes obtained via electrochemical impedance spectroscopy (EIS) are shown in Figure 4. The equivalent series resistance (ESR), or high frequency real axis intercept, decreases for the first 5 cycles and stabilizes thereafter. The high frequency semicircle also decreases in diameter with cycling, represented by R_{SEI+INT}. This is the resistance representing the SEI layer and resistance resulting from imperfect contact between current collector and active material. This contact impedance decreases with cycling, as in Figure 4g. The mid frequency semicircle representing charge transfer impedance decreases sharply for the first 5 cycles, and stabilizes thereafter, as in Figure 4f. Interfacial impedance remains fairly constant with increasing number of cycles. Therefore, contact impedance among the active particles and the current collector is not affected by cycling. Evidently, the carbon coated nano-Si anodes are not drastically affected by the volume expansion of a typical Si-based anode.

The (EIS) measurements performed after 1^{st}, 3^{rd}, 5^{th}, 7^{th}, and 9^{th} cycles show two distinct arcs. The high frequency semicircle corresponds to SEI film and contact impedance while the mid frequency semicircle corresponds to charge transfer impedance on electrode-electrolyte interface. The Warburg element represents impedance due to diffusion of ions into the active material of the electrode. The low-frequency (<200 MHz) Warburg impedance tail can be attributed to bulk diffusional effects in nano-Si This includes the diffusion of salt in the electrolyte and lithium in the carbon coated nano-Si electrodes. We observe that the biggest change occurs in impedance between the 1^{st} and the 5^{th} cycle. The change in impedance hereafter (from 5^{th} cycle to 9^{th} cycle) is relatively less pronounced, confirming that the anode tends to stabilize as it is repeatedly cycled.

The ability to mitigate the volume expansion related effects is due to the ability to produce a highly porous interconnected 3D network of nano-Si. This achieved via the addition of a relatively large amount or NaCl, which serves to absorb the large amount of heat generated in this highly exothermic Mg reduction, as in Eq. 1.

*Mg*(*g*) + *SiO*₂ → *Si*(*s*) + *MgO*(*s*) (1)

*Mg*(*g*) + *Si*(*s*) → *Mg*₂*Si*(*s*) (2)

Mg reduction evolves a large amount of heat that can cause local melting of Si and, consequently, aggregation of nano-Si particles (Mg (g): ΔH = -586.7 kJ/mol_{SiO2}). However, by surrounding the milled quartz particles with a large amount of NaCl (ΔH_{fusion} = 28.8 kJ/mol) the heat is used in the fusion of NaCl rather than in the fusion of Si. Additionally, NaCl is a highly abundant, low cost, and environmentally benign salt that can be subsequently recycled for further reductions. We also observe that the addition of NaCl also serves to reduce the presence of Mg₂Si, an unwanted product that can result from excess Mg alloying with Si, as in Eq. 2. Etching of this silicide with HCl produces silane, which is a highly toxic and pyrophoric gas. The presence of Mg₂Si also reduces the overall yield of the reduction process.

In conclusion, we have demonstrated a highly scalable, cheap, and environmentally benign synthesis route for producing nano-Si with outstanding electrochemical performance over 1000 cycles. The outstanding performance of the carbon coated nano-Si electrodes can be attributed to a number of factors including the highly porous interconnected 3D network of nano-Si, the conformal 4nm C-coating, and the use of PAA as an effective binder for C and Si electrodes. Carbon coated nano-Si electrode fabrication follows conventional slurry-based methods utilized in industry and offers a promising avenue for production of low cost and high-performance Si-based anodes for portable electronics and electric vehicle applications.

### Examples

Collected sand was first calcined at 900°C to burn off organic impurities. The sand was the wet etched in 1M HCl for 1 hour, 49% HF for 24h, and the alkaline etched in 1M NaOH. DI water washing was used after each step to remove previous etchant solution. Purified sand was hand-milled in an alumina mortar for several minutes, ultrasonicated for 1h, and then left to settle for 3h. Suspended particles in solution were collected and allowed to dry at 110°C under vacuum for 4h, while larger settled particles were later re-milled. Dried quartz powder was milled in an alumina mortar with NaCl (Fisher, molecular biology grade) in a 1:10 SiO_{2:}NaCl weight ratio. The SiO_{2:}NaCl powder was added to DI water, vigorously stirred and ultrasonicated for 4h, and then dried overnight at 110°C under vacuum. Dried SiO₂:NaCl powder was then milled with -50 mesh Mg powder (Sigma-Aldrich) in a 1:0.9 SiO₂:Mg ratio. The resultant powder was loaded into Swagelok-type reactors and sealed in an Ar-filled glovebox. Reactors were immediately loaded into a 1" quartz tube furnace (MTI GSL1600X). The furnace was ramped to 700°C at 5°Cmin⁻¹ and held for 6h with a 0.472 sccm Ar flow under vacuum. Resultant powders were washed with DI water and EtOH several times to remove NaCl and then etched in 5M HCl for 12h to remove Mg₂Si and unreacted Mg. Powders were then etched in 10% HF to remove unreacted SiO₂, washed several times with DI and EtOH, and then dried.

To increase conductivity, nano-Si powder was loaded into a quartz boat and placed in a 1" quartz tube furnace. Under ambient pressure, the system was heated to 950°C in 25min under a flow of Ar and H₂. At 950°C, C₂H₂ was introduced and kept on for 20min to produce a 4nm C-coating. C-coated nano-Si powder was mixed with acetylene black and polyacrylic acid (PAA) (Sigma-Aldrich) in a 7:1:2 weight ratio, spread onto copper foils, and dried for 4h. The mass loading density was 0.5-1.0 mgcm⁻².

Electrochemical performance of electrodes was characterized vs. Li using CR2032 coin cells with an electrolyte comprising 1M LiPF₆ in ethylene carbonate and diethyl carbonate (EC:DEC =1:1, v/v) with a 2% vol. vinylene carbonate (VC) additive for improved cycle life. Cells were assembled in an Argon-filled VAC Omni-lab glovebox. All cells were tested vs. Li from 0.01 to 1.0V using an Arbin BT2000 at varying current densities. Cyclic voltammetry and electrochemical impedance spectroscopy measurements were conducted on a Biologic VMP3 at a scan rate of 0.02 mVs⁻¹.

Figure 1 shows: (a) Flow chart showing conventional synthesis routes of nano-Si, including the introduction of our synthesis route from sand. Optical images of (b) unpurified sand, (c) purified sand, and (d) (from left to right) vials of unpurified sand, purified sand, and nano-Si. (e) Schematic of the heat scavenger-assisted Mg reduction process.

Figure 2 shows: (a) XRD plot displaying characteristic peaks of quartz in both pre-reduction samples and Si peaks in the post-reduction nano-Si. (b) EDS analysis with inset displaying weight percent of elements in nano-Si after HCl and HF etching. Low magnification (c) and higher magnification (d) SEM images of quartz powder after purification and milling. Low magnification (e) and higher magnification (f) SEM images of nano-Si after reduction and etching. Scale bars for (c),(d), (e), and (f) are 5µ, 2µ, 2µ, and 500nm, respectively.

Figure 3 shows: Low magnification (a) and high magnification (b) TEM images of nano-Si. (c) HRTEM image of nano-Si showing the conformal carbon coating and characteristic lattice spacing of Si(111). (d) HRTEM image of C-coated nano-Si showing thickness of the carbon layer. Scale bars for (a), (b), (c), and (d) are 20nm, 10nm, 2nm, and 2nm, respectively. (e) BET surface area measurements of nano-Si with type IV N₂ sorption isotherms and inset showing pore diameter distribution.

Figure 4 shows: (a) Cycling data of carbon coated nano-Si anodes with selected C-rates (C=4Ag⁻¹). (b) CV plot of the first 13 cycles using a scan rate of 0.02mVs⁻¹. (c)Charge-discharge curves for selected cycles. (d) EIS curves for selected cycles showing both experimental and fitted-model data. (e)Equivalent circuit of carbon coated nano-Si electrodes used to produce fitted-model data. Extracted resistance values from the EIS curves for (f) charge transfer resistance and (g) SEI + INT resistance.

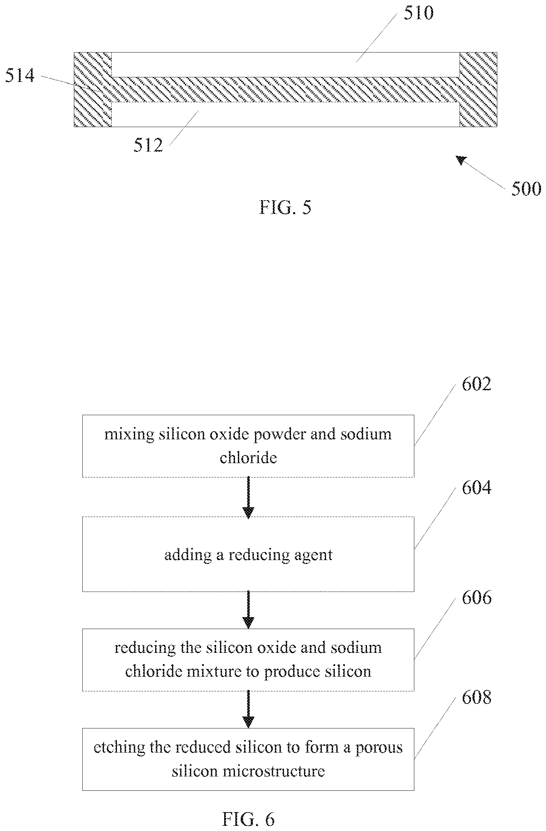

Figure 5 shows an example of a battery 500 according to an embodiment of the invention. The battery 500 is shown including an anode 510 and a cathode 512. An electrolyte 514 is shown between the anode 510 and the cathode 512. In one example, the battery 500 is a lithium-ion battery. In one example, the anode 510 is formed from a porous silicon material as described in examples above. In one example, although the invention is not so limited, the battery 500 is formed to comply with a 2032 coin type form factor.

Figure 6 shows an example method of forming according to an embodiment of the invention. In operation 602, silicon oxide powder and sodium chloride are mixed. In operation 604, a reducing agent is added. In operation 606, the silicon oxide and sodium chloride mixture is reduced. In operation 608, the reduced silicon oxide is etched to form a porous silicon microstructure.

To better illustrate the method and device disclosed herein, a nonlimiting list of embodiments is provided here:
Example 1 includes a method of forming a battery electrode. The method includes mixing silicon oxide powder and sodium chloride, adding a reducing agent, reducing the silicon oxide and sodium chloride mixture to produce silicon, and etching the reduced silicon to form a porous silicon microstructure.
Example 2 includes the method of example 1, wherein reducing the silicon oxide and sodium chloride mixture includes magnesiothermically reducing the silicon oxide and sodium chloride mixture.
Example 3 includes the method of any one of examples 1-2, wherein mixing silicon oxide powder and sodium chloride includes mixing silicon oxide powder and sodium chloride in a ratio of approximately 1:10 silicon oxide to sodium chloride by weight.
Example 4 includes the method of any one of examples 1-3, further including mixing magnesium powder with the silicon oxide powder and sodium chloride in a ratio of approximately 1:0.9 silicon oxide to magnesium by weight.
Example 5 includes the method of any one of examples 1-4, further including coating the porous silicon microstructure with a carbon coating.
Example 6 includes the method of examples 5, wherein coating the porous silicon microstructure with a carbon coating includes coating the porous silicon microstructure with an amorphous carbon coating.
Example 7 includes a battery, including a first electrode. The first electrode includes a porous silicon material, having a specific surface area of approximately 300-350 m² g⁻¹ and a pore diameter of approximately 9nm. The battery includes a second electrode, and an electrolyte in contact with both the first electrode and the second electrode.
Example 8 includes the battery of example 7, further including a carbon coating covering the porous silicon material.
Example 9 includes the battery of any one of examples 7-8 wherein the first electrode includes a mixture of carbon coated porous silicon particles, acetylene black, and polyacrylic acid.
Example 10 includes the battery of any one of examples 7-8 wherein the electrolyte includes a mixture of ethylene carbonate and dimethyl carbonate.

While a number of advantages of embodiments described herein are listed above, the list is not exhaustive. Other advantages of embodiments described above will be apparent to one of ordinary skill in the art, having read the present disclosure. Although specific embodiments have been illustrated and described herein, it will be appreciated by those of ordinary skill in the art that any arrangement which is calculated to achieve the same purpose may be substituted for the specific embodiment shown. This application is intended to cover any adaptations or variations of the present invention. It is to be understood that the above description is intended to be illustrative, and not restrictive. Combinations of the above embodiments, and other embodiments will be apparent to those of skill in the art upon reviewing the above description. The scope of the invention includes any other applications in which the above structures and fabrication methods are used. The scope of the invention should be determined with reference to the appended claims, along with the full scope of equivalents to which such claims are entitled.

## Claims

1. A method of forming a battery electrode, comprising:
mixing silicon oxide powder and sodium chloride;
adding a reducing agent;
reducing the silicon oxide and sodium chloride mixture to produce silicon;
etching the reduced silicon and forming a porous silicon microstructure; and
coating the porous silicon microstructure with an amorphous carbon coating.

2. The method of claim 1, wherein reducing the silicon oxide and sodium chloride mixture includes magnesiothermically reducing the silicon oxide and sodium chloride mixture.

3. The method of claim 1, wherein mixing silicon oxide powder and sodium chloride includes mixing silicon oxide powder and sodium chloride in a ratio of 1:10 silicon oxide to sodium chloride by weight.

4. The method of claim 2, wherein adding a reducing agent includes adding magnesium powder with the silicon oxide powder and sodium chloride in a ratio of 1:0.9 silicon oxide to magnesium by weight.

5. A battery, comprising:
a first electrode, including:
a porous silicon material, having a specific surface area of 300-350 m² g⁻¹ and a pore diameter of approximately 9nm;
a second electrode;
an electrolyte in contact with both the first electrode and the second electrode; and
a carbon coating covering the porous silicon material.

6. The battery of claim 5, wherein the first electrode includes a mixture of carbon coated porous silicon particles, acetylene black, and polyacrylic acid.

7. The battery of claim 5, wherein the electrolyte includes a mixture of ethylene carbonate and dimethyl carbonate.

## Patentansprüche

1. Verfahren zum Herstellen einer Batterieelektrode, welches aufweist:
Mischen von Siliziumoxidpulver und Natriumchlorid;
Hinzufügen eines Reduktionsmittels;
Reduzieren der Siliziumoxid- und Natriumchloridmischung, um Silizium zu erzeugen;
Ätzen des reduzierten Siliziums und Bilden einer porösen Siliziummikrostruktur; und
Beschichten der porösen Siliziummikrostruktur mit einer amorphen Kohlenstoffbeschichtung.

2. Verfahren nach Anspruch 1, bei dem das Reduzieren der Siliziumoxid- und Natriumchloridmischung eine magnesiothermische Reduktion der Siliziumoxid- und Natriumchloridmischung enthält.

3. Verfahren nach Anspruch 1, bei dem das Mischen von Siliziumoxidpulver und Natriumchlorid das Mischen von Siliziumoxidpulver und Natriumchlorid in einem Gewichtsverhältnis von 1:10 Siliziumoxid zu Natriumchlorid enthält.

4. Verfahren nach Anspruch 2, bei dem das Hinzufügen eines Reduktionsmittels das Hinzufügen von Magnesiumpulver zu dem Siliziumoxidpulver und Natriumchlorid in einem Gewichtsverhältnis von 1:0,9 Siliziumoxid zu Magnesium enthält.

5. Batterie, welche aufweist:
eine erste Elektrode, welche enthält:
ein poröses Siliziummaterial mit einer Oberflächenkennzahl von 300-350 m² g⁻¹ und einem Porendurchmesser von angenähert 9 nm;
eine zweite Elektrode;
einen Elektrolyten in Kontakt mit sowohl der ersten Elektrode als auch der zweiten Elektrode; und
eine Kohlenstoffbeschichtung, die das poröse Siliziummaterial bedeckt.

6. Batterie nach Anspruch 5, bei der die erste Elektrode eine Mischung aus mit Kohlenstoff beschichteten porösen Siliziumteilchen, Azetylenruß und Polyacrylsäure enthält.

7. Batterie nach Anspruch 5, bei der der Elektrolyt eine Mischung aus Ethylencarbonat und Dimethylcarbonat enthält.

## Revendications

1. Procédé de formation d'une électrode de batterie, comprenant :
le mélange d'une poudre d'oxyde de silicium et de chlorure de sodium;
l'ajout d'un agent de réduction ;
la réduction du mélange d'oxyde de silicium et de chlorure de sodium de manière à produire du silicium ;
la gravure du silicium réduit et la formation d'une microstructure en silicium poreux; et
le revêtement de la microstructure en silicium poreux par un revêtement en carbone amorphe.

2. Procédé selon la revendication 1, dans lequel la réduction du mélange d'oxyde de silicium et de chlorure de sodium inclut la réduction magnésiothermique du mélange d'oxyde de silicium et de chlorure de sodium.

3. Procédé selon la revendication 1, dans lequel le mélange de la poudre d'oxyde de silicium et du chlorure de sodium inclut le mélange de la poudre d'oxyde de silicium et du chlorure de sodium selon un rapport en poids oxyde de silicium sur chlorure de sodium de 1:10.

4. Procédé selon la revendication 2, dans lequel l'ajout d'un agent de réduction inclut l'ajout d'une poudre de magnésium à la poudre d'oxyde de silicium et au chlorure de sodium selon un rapport en poids oxyde de silicium sur magnésium de 1:0,9.

5. Batterie, comprenant :
une première électrode, incluant :
un matériau de silicium poreux qui présente une aire de surface spécifique de 300-350 m2g-1 et un diamètre de pore d'approximativement 9 nm ;
une seconde électrode ;
un électrolyte en contact avec à la fois la première électrode et la seconde électrode ; et
un revêtement de carbone qui recouvre le matériau de silicium poreux.

6. Batterie selon la revendication 5, dans laquelle la première électrode inclut un mélange de particules en silicium poreux revêtues de carbone, de noir d'acétylène et d'acide polyacrylique.

7. Batterie selon la revendication 5, dans laquelle l'électrolyte inclut un mélange de carbonate d'éthylène et de carbonate de diméthyle.
